# EUROPÄISCHE PATENTSCHRIFT

(11) **EP 2 431 341 B1**
(45) Veröffentlichungstag und Bekanntmachung des Hinweises auf die Patenterteilung: **17.04.2019**
(21) Anmeldenummer: 10177878.5
(22) Anmeldetag: 21.09.2010
(51) Int. Cl.: C04B 28/06, C04B 28/14, C04B 28/24, C04B 28/26

(54) **Zusammensetzung zur Ausbildung einer schnell aushärtenden, vollständig durchtrocknenden Beschichtung auf einem bauseitigen Untergrund und/oder Bauelement**
Compound for creating a quick hardening, completely hard-dried coating on a construction substructure and/or construction element
Composition destinée à la formation d'un revêtement rapidement durcissable et séchant entièrement sur un sous-sol et/ou un composant côté construction

(43) Veröffentlichungstag der Anmeldung: 21.03.2012
(73) Patentinhaber: STO SE & Co. KGaA, 79780 Stühlingen (DE)
(72) Erfinder: Basler, Stefan, 79780, Stühlingen (DE); Holzer, Michael, 78315, Rudolfzell (DE); Weier, Andreas, 78647, Trossingen (DE); Sadrina, Frank, 79780, Stühlingen (DE)
(74) Vertreter: Gottschalk, Matthias

(56) Entgegenhaltungen:
- EP-A1- 0 081 385
- DE-A1-102006 038 743
- DE-A1-102008 043 766
- DE-C1- 19 711 664
- FR-A1- 2 918 055
- FR-A3- 2 763 937
- JP-A- 2009 234 881

## Beschreibung

### Gegenstand der Erfindung

Die Erfindung betrifft eine Zusammensetzung zur Ausbildung einer schnell aushärtenden, vollständig durchtrocknenden Beschichtung, insbesondere einer Kleber-, Putz-, Mörtel-, Anstrich- oder Farbschicht, auf einem bauseitigen Untergrund und/oder Bauelement mit den Merkmalen des Oberbegriffs des Anspruchs 1. Eine solche Zusammensetzung umfasst ein organisches Bindemittel.

### Stand der Technik

Zusammensetzungen der vorstehend genannten Art, insbesondere Beschichtungsmassen, die ein organisches Bindemittel enthalten, sind aus dem Stand der Technik hinlänglich bekannt.

Will man schnelle Aushärtungszeiten erreichen, finden in der Regel organisch gebundene Beschichtungsmassen Einsatz. Ein Beispiel hierfür sind zweikomponentige Epoxidsysteme. Hierzu werden die organischen Bindemittel üblicherweise in einem nichtwässrigen Lösungsmittel gelöst, die nach dem Aufbringen der Masse verdunsten und zu schädlichen Emissionen führen können.

Eine weitgehend schadstofffreie Beschichtungsmasse geht beispielsweise aus der Patentschrift DE 197 11 664 C1 hervor. Beschrieben wird eine Beschichtungsmasse auf Basis einer filmbildenden wässrigen Kunstharzdispersion, welche auch bei niedrigen Temperaturen und hoher Luftfeuchtigkeit aushärtet. Hierzu weist die Beschichtungsmasse einen den Gefrierpunkt herabsetzenden hohen Salzgehalt sowie UV- und chemische Vernetzer auf, die aufgrund einer pH-Wert-Einstellung pH > 9 mittels Ammoniak blockiert sind, bis durch Ammoniakverdunstung der Vernetzungsmechanismus in Funktion tritt. Auf den Einsatz von Lösungsmitteln, insbesondere organischen Lösungsmitteln, deren Verwendung ökologisch bedenklich ist, kann dabei verzichtet werden. Die angegebene Beschichtungsmasse soll insbesondere bei einem an einer Gebäudewand festlegbaren Fassadensystem, wie beispielsweise einem Wärmedämmverbundsystem Einsatz finden, bei welchem sie eine außenseitige Armierungs- und Deckbeschichtung bildet. Der Verzicht auf Lösungsmittel ermöglicht zudem den Auftrag der Beschichtungsmasse auf Polystyrol-Hartschaumplatten als Dämmelemente, da keine Stoffe enthalten sind, welche die Schaumstruktur angreifen.

Aus der Offenlegungsschrift DE 198 52 874 A1 geht darüber hinaus eine bei niedrigen Temperaturen und hoher Luftfeuchtigkeit einsetzbare Beschichtungsmasse mit einer filmbildenden wässrigen Kunstharzdispersion hervor, die ferner für den Auftrag auf alkalihaltigen Untergründen geeignet ist. Hierzu ist der Beschichtungsmasse bis 5 Gew% Ammoniumsalz einer mono-, bi- oder trivalenten organischen Carbonsäure oder einer mono-, bi- oder trivalenten anorganischen Säure beigemischt. Dies führt jedoch bei Temperaturen über 10° dazu, dass die Masse schnell abbindet. Dabei bildet sich an der Oberfläche ein Schutzfilm aus, der die weitere Verarbeitung der Masse verhindert. Um die offene Zeit, d.h. die Verarbeitungszeit, zu verlängern, wird daher ferner vorgeschlagen, den pH-Wert der Masse durch Zugabe von Ammoniumhydroxid auf > 9,5 einzustellen.

Die vorstehend genannten Beschichtungsmassen weisen den Nachteil auf, dass sie zur Filmbildung an der Oberfläche neigen. Aufgrund dieser Neigung wird ein vollständiges Durchtrocknen der aufgetragenen Schicht erschwert. Die Massen können daher oftmals nur in dünnen Schichten aufgetragen werden. Ferner ist eine Verarbeitung der Massen bei niedrigen Temperaturen, nicht jedoch bei Temperaturen im Frostbereich möglich. Durch die Ammoniakverdunstung entstehen zudem Emissionen, die vom Verarbeiter als störend empfunden werden.

Aus der FR 2 763 937 A3 ist ein zweikomponentiges System auf der Basis von Calciumaluminatzement bekannt, das ähnlich schnell aushärten soll wie eine organisch gebundene Zusammensetzung. Gegenüber organisch gebundenen Zusammensetzungen sollen jedoch Zusatzstoffe, insbesondere Lösungsmittel, verwendet werden können, die weniger toxisch und damit weniger belastend für die Umwelt sind. Der in der Grundkomponente enthaltene Calciumaluminatzementanteil liegt bei 40 bis 63 Gew.-%.

Eine zweikomponentige wässrige Zusammensetzung geht darüber hinaus aus der EP 0 081 385 A1 hervor. Die Zusammensetzung soll insbesondere zur Verfüllung von Bohrlöchern oder dergleichen geeignet sein und lange Lagerzeiten ermöglichen. Hierzu ist der Grundkomponente, die mindestens 50 Gew.-% eines hochtonerdehaltigen Zements enthält, ein Verzögerer zugegeben. Die weitere Komponente umfasst demgegenüber einen Beschleuniger, der die Wirkung des Verzögerers aufhebt, wenn die Grundkomponente und die weitere Komponente gemischt werden.

Ein zweikomponentiges System geht ferner aus der FR 2918 055 A1 hervor. Eine erste Komponente basiert auf retardiertem Tonerdezement in wässriger Phase. Eine zweite Komponente umfasst einen Starter und Wasser, so dass mit Mischen der beiden Komponenten die Härtung eingeleitet wird. Auf diese Weise soll eine schnell härtende Zusammensetzung geschaffen werden, die gegenüber anderen schnell aushärtenden jedoch organisch gebundenen Zusammensetzungen umweltfreundlich und ungefährlich in der Verarbeitung ist.

Aus der DE 10 2006 038 743 A1 ist zudem ein Fliesenkleber bekannt, der einerseits eine genügend lange Verarbeitungszeit aufweisen, andererseits eine möglichst schnelle Weiterverarbeitbarkeit besitzten soll. Zur Herstellung des Fliesenklebers wird eine Feststoff-Zusammensetzung verwendet, die ein sulfatträgerfreies Portlandzement-Klinkermehl, einen Mörtelverzögerer, einen Celluloseether und ggf. weitere Bestandteile umfasst.

Aus der JP 2009 234881 A geht des Weiteren eine Zusammensetzung hervor, die sowohl eine hydraulische Komponente als auch eine Kunstharz-Emulsion umfasst. Dadurch soll die Zusammensetzung insbesondere zur Ausbildung einer wasserfesten und schnell trocknenden Farbbeschichtung geeignet sein.

Aufgabe der vorliegenden Erfindung ist es, eine zur Ausbildung einer Beschichtung, insbesondere einer Kleber-, Putz-, Mörtel-, Anstrich- oder Farbschicht, auf einem bauseitigen Untergrund und/oder Bauelement bauseits leicht zu verarbeitende Zusammensetzung bereitzustellen, die schnell aushärtet und vollständig durchtrocknet. Insbesondere soll die Zusammensetzung auch in stärker aufgetragenen Schichten ein vollständiges Durchtrocknen gewährleisten. Schließlich soll die Zusammensetzung bei widrigen Witterungsbedingungen, wie beispielsweise Temperaturen nahe dem Frostbereich und/oder hoher Luftfeuchte, verarbeitbar sein.

Die Aufgabe wird gelöst durch eine Zusammensetzung mit den Merkmalen des Anspruchs 1. Vorteilhafte Weiterbildungen der erfindungsgemäßen Zusammensetzung sind in den Unteransprüchen angegeben.

### Offenbarung der Erfindung

Die vorgeschlagene Zusammensetzung umfasst eine Grundkomponente und eine vor dem Auftragen auf dem Untergrund und/oder dem Bauelement mit der Grundkomponente zu vermischende weitere Komponente. Dabei ist ein organisches Bindemittel Bestandteil der Grundkomponente, welche zumindest Calciumaluminatzement in wässriger Phase und einen Verzögerer zur Erhöhung der Lagerstabilität der Grundkomponente enthält. Die weitere Komponente enthält einen die Härtungsreaktion initiierenden Beschleuniger.

Die beiden Komponenten der Zusammensetzung werden bauseits erst kurz vor dem Auftragen vermischt. Das heißt, dass die Lagerung der Komponenten getrennt voneinander erfolgt, wobei sich jede der beiden Komponenten als lagerstabil erweist. Erst nach dem Mischen der beiden Komponenten setzt die Härtungsreaktion ein.

Der in wässriger Phase enthaltene Calciumaluminatzement bewirkt, dass die Grundkomponente als leicht weiterzuverarbeitende pastöse Masse vorliegt. Insbesondere wird dadurch das Mischen der beiden Komponenten vereinfacht. Über das Mischen hinaus müssen der Zusammensetzung keine weiteren Stoffe zugegeben werden, um eine verarbeitungsfertige Masse zu erhalten. Vor allem ist die weitere Zugabe von Wasser entbehrlich. Dies wiederum erleichtert die Verarbeitung der erfindungsgemäßen Zusammensetzung vor Ort auf der Baustelle.

Wie eingangs bereits erwähnt weisen organische gebundene Beschichtungsmassen oder Beschichtungssysteme gegenüber pastösen, rein zementösen, mineralischen Massen den Vorteil auf, dass sie in der Regel eine höhere Lagerstabilität besitzen. Mineralisch gebundene Massen sind dagegen regelmäßig kostengünstiger und zudem in höheren Schichtstärken auftragbar. Die Zusammensetzung macht sich die Vorteile beider Systeme zunutze.

Erfindungsgemäß weist die mischfertige Grundkomponente folgende Zusammensetzung auf, wobei sich die Angaben in Gew.-% jeweils auf das Gesamtgewicht der Masse beziehen:

| | |
|---|---|
| 1 - 50 Gew.-% | organische Bindemittel, wie beispielsweise Polymerdispersion und/oder Silikonharzdispersion, |
| 1 - 50 Gew.-% | Calciumaluminatzement, |
| 0,01 - 5 Gew.-% | Verzögerer, insbesondere Borsäure und/oder Borate, |
| 5 - 80 Gew.-% | mineralische Füllstoffe, wie beispielsweise Quarz, Carbonate, Silikate, Titandioxid, |
| 0,1 - 5 Gew.-% | Additive, wie beispielsweise Emulgatoren, Hydrophobierungsmittel, rheologische Additive, Entschäumer, Konservierungsmittel, |
| 5 - 40 Gew.-% | Wasser, |

wobei die verarbeitungsfertige Mischung maximal 20 Gew.-% Calciumaluminatzement bezogen auf das Gesamtgewicht der Mischung enthält.

Gemäß einer bevorzugten Ausführungsform der Erfindung enthält die Grundkomponente Borsäure, Borate, Weinsäure, Tartrate, Citronensäure und/oder Citrate als Verzögerer. Der Einsatz von Borsäure als Verzögerer ermöglicht Lagerzeiten der zementhaltigen Masse von mehr als 6 Monaten.

Weiterhin bevorzugt enthält die weitere Komponente wenigstens eine Alkali- und/oder Erdalkaliverbindung als Beschleuniger, beispielsweise ein Oxid, ein Hydroxid, ein Carbonat, ein Sulfat, vorzugsweise Lithiumhydroxid, Lithiumcarbonat und/oder Lithiumsulfat, sowie Mischungen hieraus. Der in der weiteren Komponente enthaltene Beschleuniger neutralisiert die Wirkung des in der Grundkomponente enthaltenen Verzögerers, so dass die Härtungsreaktion nicht länger blockiert sondern in Gang gesetzt wird.

Durch den Zementanteil unterscheidet sich eine derartige Grundkomponente aufweisende verarbeitungsfertige Zusammensetzung von bereits bekannten zweikomponentigen vernetzenden organischen Bindemittelsystemen. Als solche sind insbesondere EpoxidSysteme zu nennen, die vorrangig für den Einsatz im Fußbodenbereich entwickelt wurden. Derartige Systeme enthalten in der Regel große Mengen an Lösungsmitteln, so dass sie ökologisch und toxikologisch bedenklich sind. Zudem greifen die Lösungsmittel Untergründe, wie beispielsweise eine Wärmedämmschicht bestehend aus Polystyrol-Hartschaumplatten, an. Die vorgeschlagene Zusammensetzung der Grundkomponente ist dagegen weitgehend schadstofffrei und kann auch als Bestandteil eines zweikomponentigen Systems auf einer Polystyrol-Hartschaumplatte aufgetragen werden. Das vorgeschlagene System eignet sich daher insbesondere für den Einsatz im Fassadenbereich, da hier Polystyrol-Hartschaumplatten als Wärmedämmplatten Verwendung finden. Beispielsweise kann die Zusammensetzung zum Verkleben der Platten und/oder als auf die Platten aufzutragende Putzschicht eingesetzt werden. Der in der Grundkomponente enthaltene Zementanteil ermöglicht dabei den Auftrag der Masse in stärkeren Schichten, da die Masse weniger zur Filmbildung neigt und somit ein vollständiges Durchtrocknen der Schicht gewährleistet ist. Demzufolge stellt ein möglicher und vorteilhafter Anwendungsbereich die Verwendung als Bestandteil/Schicht oder Kombination von Schichten in einem Wärmedämmsystems dar.

Die mischfertige weitere Komponente weist vorzugsweise folgende Zusammensetzung auf, wobei sich die Angaben in Gew.-% jeweils auf das Gesamtgewicht der Masse beziehen:

| | |
|---|---|
| 1 - 100 Gew.-% | Alkali- und/oder Erdalkaliverbindungen, wie Oxide, Hydroxide, Carbonate, Sulfate sowie deren Mischungen, insbesondere Lithiumhydroxid, Lithiumcarbonat und/oder Lithiumsulfat |
| 0 - 99 Gew.-% | mineralische Füllstoffe, wie beispielsweise Quarz, Carbonate, Silikate, Titandioxid, |
| 0 - 99 Gew.-% | Wasser. |

Die in der weiteren Komponente enthaltenen Alkali- und/oder Erdalkaliverbindungen als Beschleuniger bzw. Initiatoren bewirken ein schnelles Aushärten der Masse nachdem die weitere Komponente mit der Grundkomponente gemischt wurde. Die weitere Komponente muss nicht zwangsläufig in wässriger Phase vorliegen, sondern kann auch als trockene Komponente der Grundkomponente untergemischt werden. Demzufolge kann die weitere Komponente auch zu 100% aus Alkali- und/oder Erdalkaliverbindungen bestehen. Da die Mischung aus Grundkomponente und weitere Komponente nicht zur Filmbildung neigt, bleibt eine gute Verarbeitbarkeit der Masse gewährleistet. Zudem ist sichergestellt, dass auch bei einem dickschichtigen Auftrag, wie er häufig in Wärmedämmsystemen ausgeführt wird, die Masse vollständig durchtrocknet.

Vorzugsweise ist die offene Verarbeitungszeit und/oder die Aushärtungszeit der Mischung wird über den Gewichtsanteil der Grundkomponente und den Gewichtsanteil der weiteren Komponente einstellbar. Alternativ oder ergänzend kann die Einstellung der offenen Verarbeitungszeit und/oder der Aushärtungszeit über den pH-Wert der Mischung erfolgen.

Um eine optimale offene Verarbeitungszeit und/oder Aushärtungszeit zu erzielen, enthält die verarbeitungsfertige Mischung vorzugsweise wenigstens 30 Gew.-%, weiterhin vorzugsweise wenigstens 50 Gew.-% der Grundkomponente bezogen auf das Gesamtgewicht der Mischung.

Eine erfindungsgemäße Zusammensetzung ermöglicht die Ausbildung einer schnell aushärtenden und in der gesamten Schichtstärke durchtrocknenden Kleber-, Putz-, Mörtel-, Anstrich- oder Farbschicht auf einem bauseitigen Untergrund und/oder Bauelement, so dass beispielsweise eine entsprechend ausgebildete Schicht schneller überarbeitbar ist. Zudem gibt die Zusammensetzung eine größere Verarbeitungssicherheit, selbst bei stärker aufgetragenen Schichten. Die Zusammensetzung ist ferner derart gewählt, dass auch eine sichere Verarbeitung bei Temperaturen nahe dem Gefrierpunkt und/oder bei hoher Luftfeuchtigkeit möglich ist, das heißt bei Witterungsbedingungen, bei welche viele andere Systeme versagen.

Hauptanwendungsbereich einer erfindungsgemäßen Zusammensetzung soll die Ausbildung einer Kleber-, Putz-, Mörtel-, Anstrich- oder Farbschicht im Fassadenbereich, insbesondere zur Herstellung eines Fassadensystems, wie beispielsweise eines Wärmedämmverbundsystems, sein. Wobei die Zusammensetzung sowohl als Kleber zum Befestigen der Dämmplatten an einen bauseitigen Untergrund, als auch als Armierungs- und/oder Oberputz einsetzbar sein soll. Des Weiteren wird daher die Verwendung einer erfindungsgemäßen Zusammensetzung zur Ausbildung einer schnell aushärtenden, vollständig durchtrocknenden Beschichtung auf einem bauseitigen Untergrund und/oder Bauelement, insbesondere zur Ausbildung einer Kleber-, Putz-, Mörtel-, Anstrich- oder Farbschicht, beansprucht. Vorzugsweise ist die Beschichtung Bestandteil eines Wärmedämmverbundsystems.

Hierzu umfasst die erfindungsgemäße Zusammensetzung eine Grundkomponente und eine weitere Komponente, wobei die Grundkomponente bzw. die weitere Komponente wie folgt zusammengesetzt sein kann:

### Beispiel 1

**Grundkomponente "Armierungsputz"**

| | |
|---|---|
| 10,00 Gew.-% | Styrolacylat-Dispersion |
| 5,50 Gew.-% | Calciumaluminatzement |
| 0,30 Gew.-% | Borsäure |
| 0,80 Gew.-% | Filmbindehilfsmittel |
| 0,80 Gew.-% | Verdickungsmittel |
| 0,10 Gew.-% | Emulgator |
| 0,40 Gew.-% | Netzmittel |
| 0,10 Gew.-% | Entschäumer |
| 0,20 Gew.-% | Fasern |
| 61,00 Gew.-% | silikatische und carbonatische Füllstoffe |
| 20,80 Gew.-% | Wasser |
| 100,00 Gew.-% | |

Der Grundkomponente wird die weitere Komponente aus Beispiel 3 in einem Verhältnis von 99 Teilen (Grundkomponente) zu 1 Teil (weitere Komponente) zugegeben und untergemischt. Die verarbeitungsfertige Masse kann als Armierungsputz auf Bauwerksoberflächen aufgebracht werden. Die Aushärtung setzt nach ca. 2 Stunden ein. Die Beschichtung ist bei 7°C und 95% relative Luftfeuchte innerhalb von 24 Stunden derart ausgehärtet, dass die Beschichtung überarbeitbar ist.

### Beispiel 2

**Grundkomponente "Oberputz"**

| | |
|---|---|
| 2,00 Gew.-% | Vinylacetat-Dispersion |
| 15,00 Gew.-% | Calciumaluminatzement |
| 0,50 Gew.-% | Borsäure |
| 0,10 Gew.-% | Verdickungsmittel |
| 0,20 Gew.-% | Netzmittel |
| 0,20 Gew.-% | Fasern |
| 70,00 Gew.-% | silikatische und carbonatische Füllstoffe |
| 12,00 Gew.-% | Wasser |
| 100,00 Gew.-% | |

Der Grundkomponente wird die weitere Komponente aus Beispiel 3 in einem Verhältnis von 99 Teilen (Grundkomponente) zu 1 Teil (weitere Komponente) zugegeben und untergemischt. Die verarbeitungsfertige Masse kann als Oberputz auf Bauwerksflächen aufgebracht werden. Die Aushärtung setzt nach ca. 30 Minuten ein. Die Beschichtung ist bei 7°C und 95% relative Luftfeuchte innerhalb von 12 Stunden derart ausgehärtet, dass die Beschichtung überarbeitbar ist.

### Beispiel 3

**Weitere Komponente**

| | |
|---|---|
| 25,00 Gew.-% | Lithiumhydroxid |
| 15,00 Gew.-% | Lithiumcarbonat |
| 10,00 Gew.-% | carbonatische Füllstoffe |
| 50,00 Gew.-% | Wasser |
| 100,00 Gew.-% | |

## Patentansprüche

1. Zusammensetzung umfassend ein organisches Bindemittel zur Ausbildung einer schnell aushärtenden, vollständig durchtrocknenden Beschichtung, insbesondere einer Kleber-, Putz-, Mörtel-, Anstrich- oder Farbschicht, auf einem bauseitigen Untergrund und/oder Bauelement, wobei die Zusammensetzung eine Grundkomponente und eine vor dem Auftragen auf dem Untergrund und/oder dem Bauelement mit der Grundkomponente zu vermischende weitere Komponente umfasst und wobei das organische Bindemittel Bestandteil der Grundkomponente ist, welche zumindest Calciumaluminatzement in wässriger Phase und einen Verzögerer zur Erhöhung der Lagerstabilität der Grundkomponente enthält, und wobei die weitere Komponente einen die Härtungsreaktion der Zusammensetzung initiierenden Beschleuniger enthält, **dadurch gekennzeichnet, dass** die mischfertige Grundkomponente
| | |
|---|---|
| 1 - 50 Gew.-% | organische Bindemittel, wie beispielsweise Polymerdispersion und/oder Silikonharzdispersion, |
| 1 - 50 Gew.-% | Calciumaluminatzement, |
| 0,01 - 5 Gew.-% | Verzögerer, insbesondere Borsäure und/oder Borate, |
| 5 - 80 Gew.-% | mineralische Füllstoffe, wie beispielsweise Quarz, Carbonate, Silikate, Titandioxid, |
| 0,1 - 5 Gew.-% | Additive, wie beispielsweise Emulgatoren, Hydrophobierungsmittel, rheologische Additive, Entschäumer, Konservierungsmittel, |
| 5 - 40 Gew.-% | Wasser |
bezogen auf das Gesamtgewicht der Grundkomponente enthält, wobei die verarbeitungsfertige Mischung maximal 20 Gew.-% Calciumaluminatzement bezogen auf das Gesamtgewicht der Mischung enthält.

2. Zusammensetzung nach Anspruch 1,
**dadurch gekennzeichnet, dass** die Grundkomponente Borsäure, Borate, Weinsäure, Tartrate, Citronensäure und/oder Citrate als Verzögerer enthält.

3. Zusammensetzung nach Anspruch 1 oder 2,
**dadurch gekennzeichnet, dass** die weitere Komponente wenigstens eine Alkali- und/oder Erdalkaliverbindung als Beschleuniger enthält, beispielsweise ein Oxid, ein Hydroxid, ein Carbonat, ein Sulfat, vorzugsweise Lithiumhydroxid, Lithiumcarbonat und/oder Lithiumsulfat, sowie Mischungen hieraus.

4. Zusammensetzung nach einem der vorhergehenden Ansprüche,
**dadurch gekennzeichnet, dass** die mischfertige weitere Komponente
| | |
|---|---|
| 1 - 100 Gew.-% | Alkali- und/oder Erdalkaliverbindungen, wie Oxide, Hydroxide, Carbonate, Sulfate sowie deren Mischungen, insbesondere Lithiumhydroxid, Lithiumcarbonat und/oder Lithiumsulfat |
| 0 - 99 Gew.-% | mineralische Füllstoffe, wie beispielsweise Quarz, Carbonate, Silikate, Titandioxid, |
| 0 - 99 Gew.-% | Wasser |
bezogen auf das Gesamtgewicht der weiteren Komponente enthält.

5. Zusammensetzung nach einem der vorhergehenden Ansprüche,
**dadurch gekennzeichnet, dass** die verarbeitungsfertige Mischung wenigstens 30 Gew.-%, vorzugsweise wenigstens 50 Gew.-% der Grundkomponente bezogen auf das Gesamtgewicht der Mischung enthält.

## Claims

1. A composition comprising an organic binder to form a rapidly curing, thoroughly drying coating, in particular a layer of adhesive, cleaning agent, mortar, paint or a coating layer on a construction site substrate and/or component wherein the composition comprises a basic component and another component to be mixed with the basic component before being applied to the substrate and/or the building element, and wherein the organic binder is an ingredient of the basic component, which contains at least calcium aluminate cement in aqueous phase and a retarding agent to increase the stability of the basic component during storage, and wherein the additional component contains an accelerator that initiates the curing reaction of the composition, **characterized in that** the ready-to-mix basic component contains:
| | |
|---|---|
| 1 - 50 % by weight | organic binders, such as a polymer dispersion and/or a silicone resin dispersion, |
| 1 - 50 % by weight | calcium aluminate cement, |
| 0.01 - 5 % by weight | retarding agent, in particular boric acid and/or borates, |
| 5 - 80 % by weight | mineral fillers, such as quartz, carbonates, silicates, titanium dioxide, |
| 0.1 - 5 % by weight | additives, such as emulsifiers, for example, hydrophobizing agents, rheologic additives, foam suppressants, preservatives, |
| 5 - 40 % by weight | water, |
based on the total water weight of the basic component, wherein the ready-for-processing mixture contains max. 20 % by weight calcium aluminate cement, based on the total weight of the mixture.

2. The composition according to claim 1,
**characterized in that** the basic component contains boric acid, borates, tartaric acid, tartrates, citric acid and/or citrates as the retarding agent.

3. The composition according to claim 1 or 2,
**characterized in that** the additional component contains at least one alkaline compound and/or alkaline earth compound as an accelerator, for example, an oxide, a hydroxide, a carbonate, a sulfate, preferably lithium hydroxide, lithium carbonate and/or lithium sulfate, as well as mixtures thereof.

4. The composition according to any one of the preceding claims,
**characterized in that** the ready-to-mix additional component contains:
| | |
|---|---|
| 1 - 100 % by weight | alkaline compounds and/or alkaline earth compounds, such as oxides, hydroxides, carbonates, sulfates as well as mixtures thereof, in particular lithium hydroxide, lithium carbonate and/or lithium sulfate, |
| 0 - 99 % by weight | mineral fillers, such as, for example, quartz, carbonates, silicates, titanium dioxide |
| 0 - 99 % by weight | water, |
based on the total weight of the additional component.

5. The composition according to any one of the preceding claims,
**characterized in that** the ready-to-process mixture contains at least 30 % by weight, preferably at least 50 % by weight, of the basic component, based on the total weight of the mixture.

## Revendications

1. Composition comprenant un liant organique destinée à former un revêtement à durcissement rapide subissant un séchage sur toute son épaisseur, s'agissant notamment d'une couche d'adhésif, de crépi, de mortier, de peinture ou de peinture colorante, sur un support et/ou élément de construction faisant partie d'une structure existante, ladite composition comprenant un constituant de base et un autre constituant à mélanger au constituant de base avant application sur ledit support et/ou ledit élément de construction, et le liant organique faisant partie intégrante du constituant de base lequel contient au moins du ciment d'aluminate de calcium en phase aqueuse et un retardateur de prise destiné à augmenter la stabilité durant le stockage du constituant de base, et ledit autre constituant contenant un accélérateur de prise initialisant la réaction de durcissement de la composition, **caractérisée en ce que** le constituant de base, prêt à être mélangé, contient
| | |
|---|---|
| 1 à 50 % en poids | de liants organiques tels que, par exemple, une dispersion de polymère et/ou une dispersion de résine de silicone, |
| 1 à 50 % en poids | de ciment d'aluminate de calcium, |
| 0,01 à 5 % en poids | de retardateurs de prise, s'agissant notamment d'acide borique et/ou de borate, |
| 5 à 80 % en poids | de charges minérales telles que, par exemple, le quartz, des carbonates, des silicates, le dioxyde de titane, |
| 0,1 à 5 % en poids | d'additifs tels que, par exemple, des émulsifiants, des agents d'hydrophobation, des additifs de rhéologie, des agents anti-mousse, des conservateurs, |
| 5 à 40 % en poids | d'eau, |
par rapport au poids total du constituant de base, le mélange prêt à l'emploi contenant au maximum 20 % en poids de ciment d'aluminate de calcium par rapport au poids total du mélange.

2. Composition selon la revendication 1,
**caractérisée en ce que** le constituant de base contient de l'acide borique, des borates, de l'acide tartrique, des tartrates, de l'acide citrique et/ou des citrates en tant que retardateur de prise.

3. Composition selon les revendications 1 ou 2,
**caractérisée en ce que** ledit autre constituant contient au moins un composé alcalin et/ou alcalinoterreux en tant qu'accélérateur de prise, s'agissant par exemple d'un oxyde, d'un hydroxyde, d'un carbonate, d'un sulfate, préférentiellement d'hydroxyde de lithium, de carbonate de lithium et/ou de sulfate de lithium ainsi que de leurs mélanges.

4. Composition selon l'une des revendications précédentes, **caractérisée en ce que** ledit autre constituant, prêt à être mélangé, contient
| | |
|---|---|
| 1 à 100 % en poids | de composés alcalins et/ou alcalinoterreux tels que les oxydes, les hydroxydes, les carbonates, des sulfates ainsi que leurs mélanges, s'agissant notamment d'hydroxyde de lithium, de carbonate de lithium et/ou de sulfate de lithium |
| 0 à 99 % en poids | de charges minérales telles que, par exemple, le quartz, des carbonates, des silicates, le dioxyde de titane, |
| 0 à 99 % en poids | d'eau, |
par rapport au poids total dudit autre constituant.

5. Composition selon l'une des revendications précédentes, **caractérisée en ce que** le mélange prêt à l'emploi contient au moins 30 % en poids, de préférence au moins 50 % en poids, du constituant de base, par rapport au poids total dudit mélange.
